# EUROPÄISCHE PATENTSCHRIFT

(11) **EP 1 989 067 B1**
(45) Veröffentlichungstag und Bekanntmachung des Hinweises auf die Patenterteilung: **07.04.2010**
(21) Anmeldenummer: 07722923.5
(22) Anmeldetag: 24.02.2007
(51) Int. Cl.: B60G 3/20, B60G 7/02, B62D 21/11

(54) **EINZELRADAUFHÄNGUNG FÜR EINE HOCHLENKERACHSE**
INDEPENDENT SUSPENSION FOR A DOUBLE-WISHBONE HIGH LINK AXLE
SUSPENSION INDEPENDANTE POUR ESSIEU A BRAS SURELEVE

(30) Priorität: 01.03.2006 DE 102006009300
(43) Veröffentlichungstag der Anmeldung: 12.11.2008
(73) Patentinhaber: Daimler AG, 70327 Stuttgart (DE)
(72) Erfinder: MAUZ, Uwe, 73730 Esslingen (DE)
(74) Vertreter: JENSEN & SON
(86) Internationale Anmeldenummer: PCT/EP2007/001611
(87) Internationale Veröffentlichungsnummer: WO 2007/101568

(56) Entgegenhaltungen:
- EP-A1- 0 530 594
- EP-A1- 0 940 272
- WO-A-02/26548
- WO-A-02/053447
- DE-A1- 10 011 417

## Beschreibung

Die Erfindung betrifft eine Einzelradaufhängung für eine Hochlenkerachse mit pro Radseite einem Radträger, der über mindestens einen unteren Lenker und mindestens einen oberen Lenker, einem Quer- oder Schräglenker, an einem am Fahrzeugrahmen befestigten Montagerahmen gelagert ist.

Aus der gattungsbildenden DE 100 11 417 A1 ist eine derartige Einzelradaufhängung bekannt. Allerdings ist hier der Montagerahmen zweiteilig ausgeführt, wobei beide Montagerahmenteile nur über den Fahrzeugrahmen miteinander verbunden sind. Um mit den vorliegenden Montagerahmenteilen und dem Fahrzeugrahmen eine formsteife Konstruktion zu erzielen, müssen die Querschnitte der Längsholmen des Fahrzeugrahmens s-förmig gestaltet werden.

Der vorliegenden Erfindung liegt die Problemstellung zugrunde, eine Einzelradaufhängung für eine in einem Montagerahmen gelagerte Hochlenkerachse zu entwickeln, bei der der Montagerahmen alle Lenker lagert und bei der die Lagerung des oberen Lenkers besonders formsteif sowie montage- und wartungsfreundlich gestaltet wird.

Diese Problemstellung wird mit den Merkmalen des Hauptanspruchs gelöst. Dazu umfasst der Montagerahmen zwei Längsträger und zwei Quertraversen, wobei die Quertraversen mit den Längsträgern kraft- oder stoffschlüssig verbunden sind. Die hintere Quertraverse ist nach oben verlängert, wobei diese Verlängerung einen Lenkerträger für den oberen Lenker bildet oder den Lenkerträger über ein Tragelement formsteif lagert. Zwischen den Quertraversen ist pro Längsträger ein weiterer Lenkerträger für den oberen Lenker angeordnet, der jeweils den nächstgelegenen Längsträger form- oder kraft- oder stoffschlüssig umgreift.
Mit der Erfindung wird eine Einzelradaufhängung an einem Fahrzeugrahmen in einem Montagerahmen gelagert. Der Montagerahmen ist dabei ein Art von Fahrschemel, der starr - also ohne Zwischenlage von Elastomerkörpern - an den Längsholmen des Fahrzeugrahmens befestigt ist. Der Montagerahmen bildet somit zusammen mit den Bauteilen der Radaufhängung, einschließlich der Lenkung, der Dämpfung und der Federung, ein komplettes Vorderachsmodul, das als Ganzes am Fahrzeugrahmen befestigt wird.

Der Montagerahmen ist im Wesentlichen ein z.B. rechteckiger Rahmen, der auf zwei Längsträgern und zwei Quertraversen basiert. Die einzelnen, durch die Quertraversen miteinander verbundenen Längsträger sind rohrförmige Träger, die jeweils einen geschlossenen, torsionssteifen Querschnitt haben. Das einzelne Längsträgerrohr kann ein Zylinderrohr, ein konisches Rohr, ein Vierkantrohr oder dergleichen sein. Der rohrförmige Längsträger kann auch einen Querschnitt haben, dessen Außenkante eine ovale, elliptische oder polygonale Kontur hat. Der Hohlraum des Rohres kann stattdessen einen Querschnitt haben, dessen Kontur der Außenkontur des Längsträgerquerschnitts nicht entspricht. Auch kann der Längsträger über die Länge seine Querschnittsform und seine Querschnittsfläche ändern.

Auf diese Weise kann der einzelne Längsträger, der z.B. über die Lenkungsanbindung und über das Stützmoment der vorderen Lenkerträger auf Biegung beansprucht wird, auch in speziellen Vorzugsrichtungen besonders biegesteif gestaltet werden.

In Kombination mit den die oberen Lenker tragenden Bauteilen bildet der Montagerahmen eine steife Tragstruktur, die u.a. zudem geeignet ist, den gesamten, vor der Vorderachse angeordneten Vorderwagen abzustützen.

Alternativ kann die in dem Montagerahmen gelagerte Einzelradaufhängung auch für einfachbereifte Vor- oder Nachlaufachsen verwendet werden. Im Falle einer Nachlaufachse sind im Folgenden die fahrtrichtungsabhängigen Richtungsangaben "vorn" und "hinten" zu vertauschen.

Weitere Einzelheiten der Erfindung ergeben sich aus den Unteransprüchen und der nachfolgenden Beschreibung einer schematisch dargestellten Ausführungsform:
- Figur 1:: Nfz-Vorderachse mit Leiterrahmen;
- Figur 2:: wie Figur 1, jedoch ohne Leiterrahmen;
- Figur 3:: Gasfederdämpferbein mit oberem Querlenker;
- Figur 4:: wie Figur 3, jedoch mit demontiertem Gas- federdämpferbein und ohne oberen Querlenker;
- Figur 5:: Längsschnitt durch ein Gasfederdämpferbein;
- Figur 6:: Seitenansicht eines Gasfederdämpferbeins, verkleinert;
- Figur 7:: Rückansicht einer Hochlenkerachse.

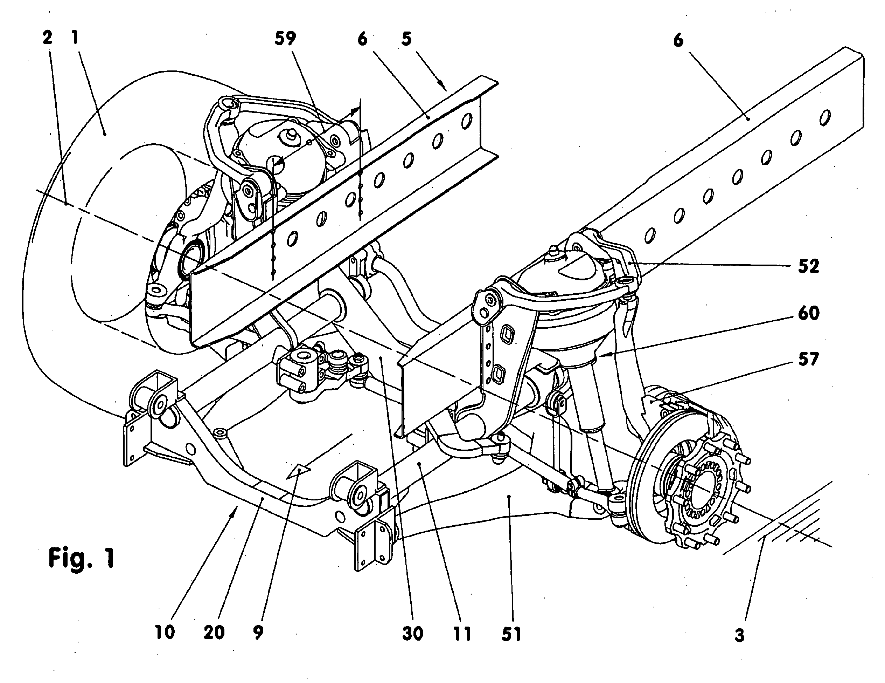

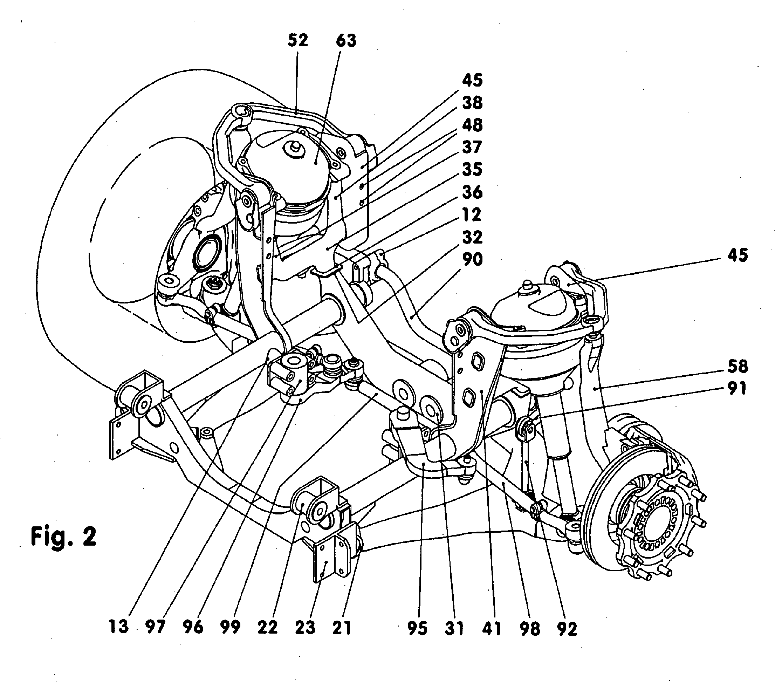

Figur 1 zeigt eine an einem Leiterrahmen befestigte Hochlenkerachse als Vorderachse eines Nutzfahrzeuges mit Einzelradaufhängung. Die Vorderachse ist beispielsweise gelenkt und nicht angetrieben. In Figur 2 ist die Vorderachse ohne die Längsholme (6) des Fahrzeugrahmens (5) dargestellt. Die einzelne Einzelradaufhängung umfasst u.a. einen unteren Schräglenker (51), einen oberen Querlenker (52), einen Radträger (57) und ein Gasfederdämpferbein (60). Letzteres kann auch durch ein Federbein ersetzt werden, dessen Federung z.B. auf mindestens einer mechanischen Schraubenfeder basiert. Die Schräglenker (51) und die Querlenker (52), die ggf. jeweils in zwei Einzellenker aufgelöst sein können, sind an einem fahrschemelartigen Montagerahmen (10) gelenkig gelagert. Der Montagerahmen (10) selbst ist direkt am Fahrzeugrahmen (5) bzw. an den Längsholmen (6) verschraubt.

Bei dieser Einzelradaufhängung hat der obere Querlenker (52) ein radträgerseitiges Gelenk (53), dessen kürzester Abstand zur Fahrbahnoberfläche - in der Konstruktionslage - zumindest dem Reifendurchmesser des hier gelagerten Rades (1) entspricht.

Der Montagerahmen (10) besteht aus zwei z.B. parallelen Längsträgern (11), zwei Quertraversen (20, 30), zwei gabelartigen Tragelementen (35), zwei vorderen (41) und zwei hinteren Querlenkerträgern (45).

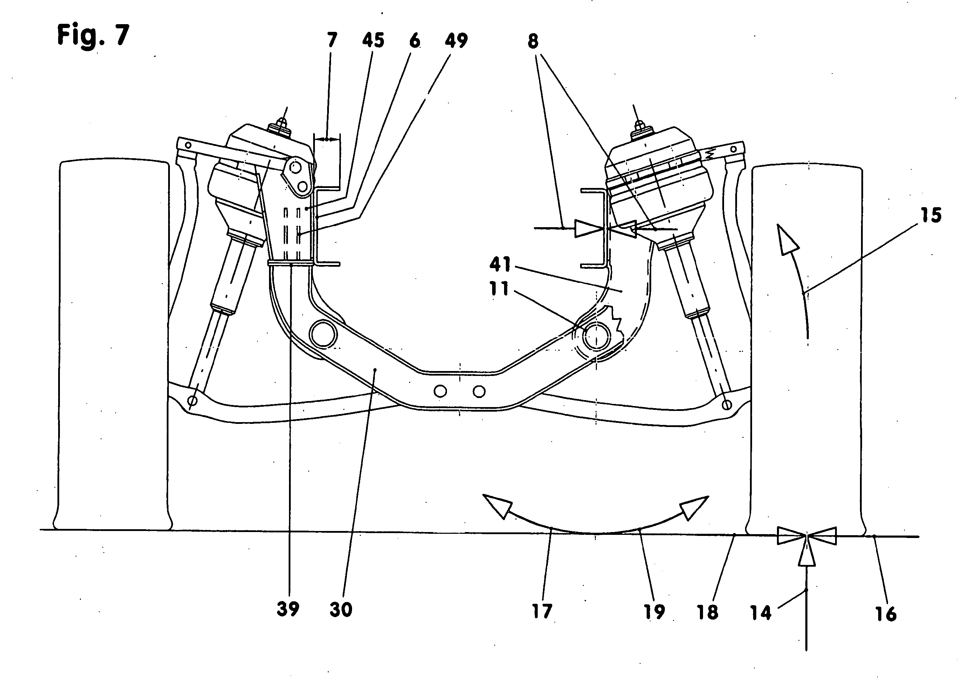

Die rohrförmigen Längsträger (11), die z.B. einen kreisringförmigen Querschnitt haben, sind parallel zu den Längsholmen (6) ausgerichtet und liegen ca. auf dem Höhenniveau der Raddrehachse (2), vgl. Figur 7. Der größte Außendurchmesser bzw. die größte Breite der Längsträger (11) ist mindestens so groß wie die Breite (7) der Längsholme (6) im Bereich der Hochlenkerachse. Beispielsweise tangiert die Raddrehachse (2) in der Konstruktionslage die Längsträger (11) an ihrer Unterseite. Jeder Längsträger (11) liegt unterhalb des nächstgelegenen Längsholmes (6). Die vorderen Enden der Längsträger (11) sind über die vordere (20) und die hinteren Enden über die hintere Quertraverse (30) formsteif verbunden. Die Längsträger (11) sind mit den Quertraversen (20, 30) - in der Draufsicht gesehen - zu einem zumindest annähernd rechteckigen Rahmen verschweißt. Die Quertraversen sind hier zweifach gebogene Vierkantrohre, die über ihre Längsausdehnung mehrfach die Querschnittsfläche und -form ändern. Sie sind zumindest annähernd sichelförmig nach unten gebogen, um für den in diesem Bereich zwischen den Längsholmen (6) gelegenen Fahrzeugmotor entsprechend Platz zu lassen. Trotz der Krümmung liegen die gedachten, gebogenen Mittellinien der Quertraversen (20, 30) in einer zumindest annähernd vertikal ausgerichteten Fahrzeugquerebene. Die vordere Quertraverse (20) liegt dabei vor der Raddrehachse (2), während die hintere (30) hinter ihr (2) liegt.

Die hintere Quertraverse (30) endet beidseits - kurz unterhalb der Längsholme (6) - jeweils in einem Flansch (32). An den Flanschen (32) sind die nach oben ragenden gabelartigen Tragelemente (35) angeschweißt.

Das einzelne Tragelement (35) hat einen vorderen (37) und einen hinteren Arm (38). Beide zumindest annähernd parallele Arme (37, 38) haben zueinander einen solchen Abstand, dass ein Gasfederdämpferbein (60) mit seinem Balgbereich mit einem Spiel von mehreren Millimetern oder Zentimetern hineinpasst, vgl. Figur 2.

Der fußseitige Flansch (36) des jeweiligen Tragelements (35) hat zum hinteren Arm (38) einen kürzeren Abstand als zum vorderen (37). Die Differenz beträgt ca. ein Drittel des gesamten Armabstands.

Der jeweils hintere Arm (38) greift formschlüssig in den jeweiligen hinteren Querlenkerträger (45) ein. Die vorderen Arme (37) sind auf die gleiche Art mit den vorderen Querlenkerträgern (41) verbunden. Neben dem Formschluss sind die Arme (37, 38) und die Querlenkerträger (41, 45) miteinander verschweißt. Die vorderen Querlenkerträger (41) sind nach unten verlängert und umgreifen zusätzlich jeweils den nächstgelegenen rohrförmigen Längsträger (11). Das untere, den Längsträger (11) umgreifende Ende des vorderen Querlenkerträgers (41) ist mit dem Längsträger (11) verschweißt.

Alternativ zur Lagerung der Querlenkerträger (41, 45) an einem an der hinteren Quertraverse (30) gelagerten Trägerelement (35), kann an den Flanschen (32) der jeweilige hintere Querlenkerträger (45) direkt angeflanscht werden. Um das Trägerelement (35) überflüssig zu machen, ist zumindest der hintere Querlenkerträger (45) in Fahrzeuglängsrichtung formsteifer ausgebildet. Hierzu weist er z.B. Verrippungen (49) auf, die in einer zumindest annähernd vertikalen Fahrzeuglängsebene liegen, vgl. Figur 7.

Der nach den Figuren 1 und 2 vorn liegende Querlenkerträger (41) ist drehstarr auf dem Längsträger (11) befestigt. Die auf das entsprechende Rad wirkenden Normal- (14) und Seitenkräfte (16, 18) wirken somit als Drehmomente (15) und (17, 19) auf den Längsträger (11). Da letzterer als Rohr mit einem geschlossenen Querschnitt außerordentlich torsionssteif ist, führen die Normal- und Seitenkräfte nur zu minimalen Torsionsverformungen. Das hat zur Folge, dass die über die Querlenkerträger (41) auf die Längsholme (6) wirkenden Querkräfte (8) so gering sind, dass in unmittelbarer Nähe der Hochlenkerachse auf eine zusätzliche - die Längsholme (6) aussteifende - Achsbrücke verzichtet werden kann.

Die hinteren Querlenkerträger (45) stützen sich nach den Figuren 1 und 2 an den Trägerelementen (35) ab. Letztere sitzen über die Flansche (36) an der hinteren Quertraverse (30). Die Quertraverse (30) und das Trägerelement (35) bilden - um die Fahrzeuglängsachse herum - einen biegesteifen Träger.

Nach Figur 7 sind die hinteren Querlenkerträger (45) direkt über die Flansche (39) mit der hinteren Quertraverse (30) verschraubt. Hier bilden die Quertraverse (30) und die Querlenkerträger (45) direkt einen biegesteifen Träger.

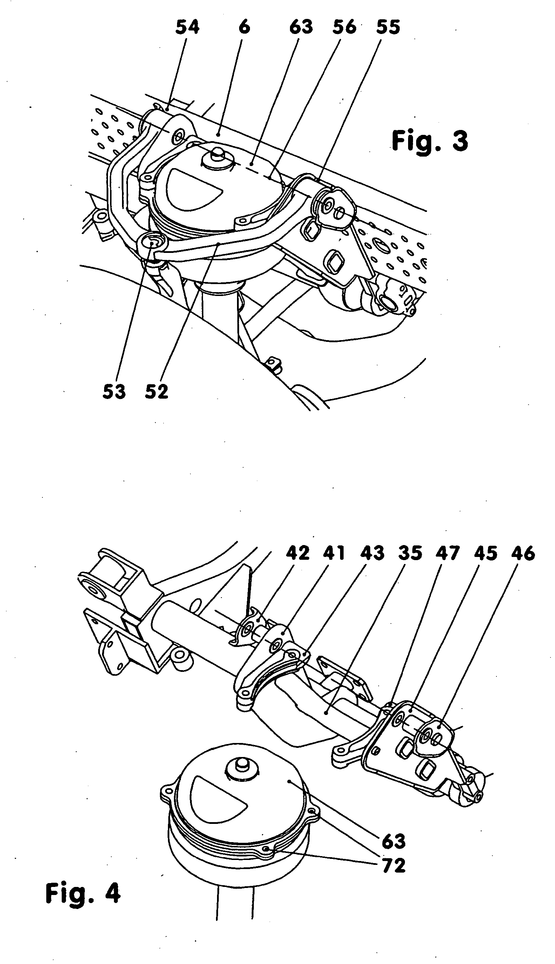

Die vier Querlenkerträger (41, 45) sind an ihren oberen Enden - zur Aufnahme der fahrzeugaufbauseitigen Querlenkergelenke (54, 55) - gabelförmig ausgestaltet, vgl. auch Figur 4. Dazu sind an den Querlenkerträgern (41, 45) zusätzliche Gabellaschen (42, 46) angeschweißt. Die fahrzeugaufbauseitigen Gelenke (54, 55) der Querlenker (52) haben hier beispielsweise eine horizontale Schwenkachse (56), die zudem zumindest annähernd parallel zur Fahrtrichtung (9) orientiert ist. Unterhalb des Gelenkbereiches tragen die pro Radseite paarweise angeordneten Querlenkerträger (54, 55) an den einander zugewandten Flächen Befestigungskonsolen (43, 47) für die Lagerung des Gasfederdämpferbeins (60). Die formsteifen Befestigungskonsolen (43, 47) haben z.B. jeweils zwei Bohrungen und eine zum Gasfederdämpferbein (60) hin orientierte sichelförmige Kontur. Die sichelförmige Kontur soll eine möglichst formschlüssige Anlage am Gasfederdämpferbein (60) ermöglichen.

Nach Figur 2 haben die bereichsweise winkelförmig gestalteten Querlenkerträger (41, 45) mehrere Bohrungen (48), über die der Montagerahmen (10) an den Längsholmen (6) des Leiterrahmens (5) verschraubt ist, vgl. Figur 1 und 2. Die Querlenkerträger (41, 45) einer Radseite haben hierbei an dem entsprechenden Längsholm (6) einen Befestigungsabstand (59), der kürzer ist als der halbe, mittlere Abstand der Quertraversen (20) und (30).

Die vordere Quertraverse (20) trägt an ihren Enden je drei Befestigungsstellen. Die räumlich am tiefsten gelegenen Befestigungsstellen sind die vorderen Lager (21), der Schräglenker (51). Die im oberen Bereich der Quertraverse (20) angeordneten Befestigungsstellen sind die Gelenke (22) zur Anlenkung von Blattfedern einer wahlweise oder in einem sog. "Zweiten Fahrzeuglebenszyklus" einbaubaren Starrachse. Die seitlich an den Stirnseiten der vorderen Quertraverse (20) liegenden Befestigungsstellen sind winkelförmige Adapter (23) zur Befestigung eines Aufprallstoßabsorbers, der sog. Crashbox.

An der hinteren Quertraverse (30) sind im mittleren Bereich die hinteren Lager (31) der unteren Schräglenker (51) angeordnet. An diesen - unterhalb einer horizontalen Radmittenebene (3) liegenden - Schräglenkern (51) ist fahrwerksseitig der Radträger (57) gelenkig gelagert. Letzterer ist über einen vertikal orientierten Radträgerarm (58) gelenkig mit dem radträgerseitigen Gelenk (53) des oberen Querlenkers (52) gekoppelt.

Zwischen dem unteren Schräglenker (51) und dem oberen Querlenker (52) ist das Gasfederdämpferbein (60) eingebaut. Seine Mittellinie (61) ist - gemessen in einer lotrechten Projektion auf eine fiktive vertikale Fahrzeugquerebene - um 15...20 Winkelgrade geneigt, wobei die beiden oberen fahrzeugaufbauseitigen Anlenkpunkte der Gasfederdämpferbeine (60) einer Achse näher beieinander liegen als die entsprechenden unteren, fahrwerkseitigen Anlenkpunkte. Eine Projektion der Mittellinie (61) auf eine vertikale Fahrzeuglängsebene ist gegen die Vertikale z.B. um 2-4 Winkelgrade geneigt, wobei die unteren Anlenkpunkte in Fahrtrichtung (9) den oberen vorauseilen.

Die Luftfederung (62) bzw. der Gasfederanteil des Gasfederdämpferbeins (60) ist in einem Raum angeordnet, der mit Spiel durch den jeweiligen Längsholm (6), das entsprechende gabelartige Tragelement (35), die Querlenkerträger (41, 45), den Querlenker (52) und den Radträgerarm (57) begrenzt wird.

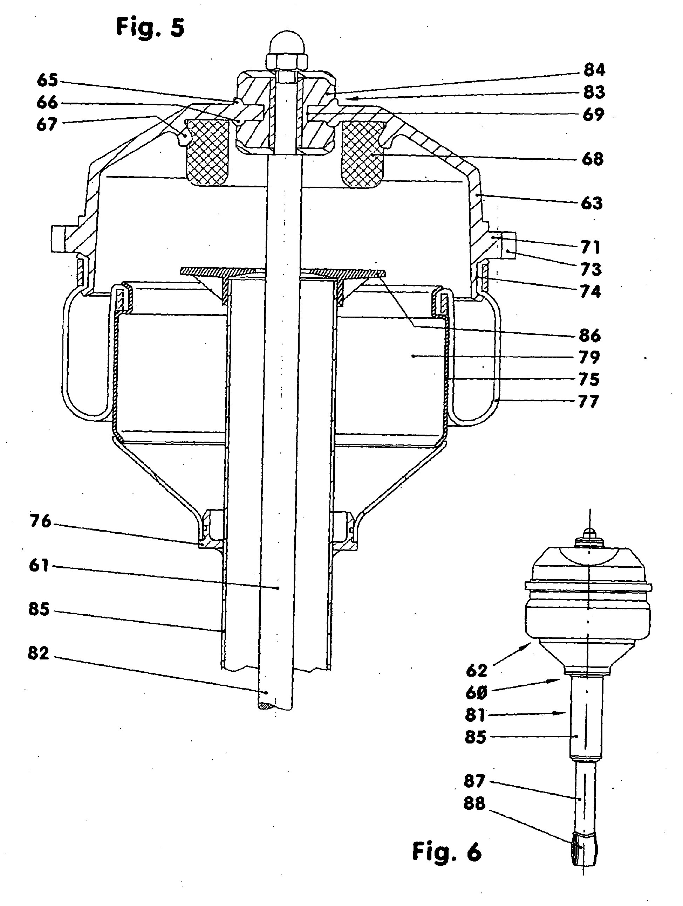

Das Gasfederdämpferbein (60) umfasst einen Stoßdämpfer (81). Von diesem ist in den Figuren 5 und 6 zum einen das Dämpferrohr (85) mit Verlängerung (87) und Gelenkauge (88) und zum anderen die Kolbenstange (82) mit ihrem oberen gelenkigen Stützlager (83) dargestellt. Nach den Figuren 1 und 2 ist das Gelenkauge (88) am Schräglenker (51) in der Nähe des unteren Radträgergelenks gelagert. Das Stützlager (83) lagert in der als Stütztopf (63) gestalteten formsteifen Kopfplatte der Gasfeder (62).

Der einteilige, z.B. aus Stahl gefertigte Stütztopf (63) hat eine Topfform, die aus einem Kegelstumpfmantel und einem Zylindermantel zusammengesetzt scheint. Im Zylindermantelbereich hat sie eine außen umlaufende versteifende Rippe (71), in der z.B. vier Gewindebohrungen (72) angeordnet sind, vgl. Figur 4. Im Bereich der Bohrungen (72) ist dazu die Rippe (71) verbreitert. Bei einem im Montagerahmen (10) eingebauten Gasfederdämpferbein (60) liegt die Rippe (71) von unten her form- und kraftschlüssig an den Befestigungskonsolen (43, 47) der Querlenkerträger (41, 45) an.

Der Stütztopf (63) hat zur Aufnahme des Stützlagers (83) eine zentrale Bohrung (69) und z.B. zwei Ringstege (65, 66), einer (66) innen und einer (65) außen. An den Ringstegen (65, 66) wird der Elastomerkörper (84) des Stützlagers (83) sicher positioniert. Der Elastomerkörper (84) sitzt verschraubt auf dem Kolbenstangenende zwischen zwei Scheiben eingeklemmt, die durch eine Hülse auf Abstand gehalten werden.

Um das Stützlager (83) herum ist im Verdrängerraum (79) ein ringförmiger Gummipuffer (68) als mechanische Federhubbegrenzung angeordnet. Er wird von einem weiteren - den Stütztopf (63) innen versteifenden - Ringsteg (67) gehalten. An dem Gummipuffer (68) kommt bei einem vollständig eingefederten Rad (1) der am oberen Ende des Dämpferrohres (85) angeordnete Anschlagteller (86) zur Anlage.

Nach Figur 5 ist am Dämpferrohr (85) ein Federteller (76) angeschweißt. Letzterer trägt einen Abrollkolben (75) mit z.B. zylindrischen Balgabrollbereich. Zwischen dem Abrollkolben (75) und dem Stütztopf (63) ist ein Schlauchrollbalg (77) angeordnet. Letzterer wird am Abrollkolben (75) und am Stütztopf (63) jeweils mittels eines Klemmringes gehalten. Im Abrollkolben (75) und im Stütztopf (63) sind dazu entsprechende umlaufende Sicken vorhanden. Die Sicke (74) des Stütztopfes (63) liegt unmittelbar unterhalb der Versteifungsrippe (71).

Innerhalb des Gasfederdämpferbeins (60) dient die Kolbenstange (82) des Stoßdämpfers (81) als Geradführung für die Gasfederung (62).

Bei der Ausführungsvariante nach den Figuren 1 - 6 erfüllt der Stütztopf (63) vier voneinander unabhängige Funktionen. Die erste Funktion ist eine Aussteifung der Lagerung des oberen Querlenkers (52). Der Stütztopf (63) bildet zusammen mit den Querlenkerträgern (41, 45), dem Längsträger (11) und dem Tragelement (35) eine besonders formsteife Baugruppe, deren Verwindungssteifigkeit durch die Verschraubung mit dem Leiterrahmen (5) zusätzlich erhöht wird. Ferner nimmt der Stütztopf (63) das Stützlager (83) des Stoßdämpfers (81) auf, so dass dessen separate Anlenkung am Fahrzeugaufbau (5) entfällt.

Des Weiteren lassen sich beim Einbau des Gasfederdämpferbeins (60) in den Montagehilfsrahmen (10) über die Verschraubung des Stütztopfs (63) an den Querlenkerträgern (41, 45) bzw. über deren Befestigungskonsolen (43, 47) das Gelenkspiel der Gelenke (54, 55) einstellen. Der Grund des bisherigen Einstellerfordernisses ist bedingt durch das Einpressen der Elastomergelenke (54, 55) in die Gelenkaugen des oberen Querlenkers (52). Die Einpresslage der Elastomergelenke (54, 55) ist z.B. mit 0,75 Millimeter Toleranz ausgestattet. Im ungünstigsten Fall kann der Lagerabstand um 1,5 Millimeter variieren. Um ein Klemmen der Lenkerschwenkbewegung zu vermeiden, sind die rahmenseitigen Lager bisher einstellbar. Hier jedoch wird der Querlenker (52) mit seinen Elastomergelenken (54, 55) an den Querlenkerträgern (41, 45) eingesetzt und anschließend wird der Abstand zwischen den Querlenkerträgern (41, 45) - einer Radseite - so variiert, dass der Querlenker (52) mit minimalem Spiel klemmfrei bewegbar ist. In dieser Position wird der Stütztopf (63) mit den Querlenkerträgern verschraubt. Bei einem späteren Montieren des Montagerahmens (10) am Leiterrahmen (5) wird durch die Verschraubung der Querlenkerträger (41, 45) mit den Längsholmen (6) die Lenkerspieleinstellung nochmals gesichert, so dass im Wartungsfall das Gasfederdämpferbein (60) ausgetauscht werden kann, ohne dabei das Lenkerspiel zu verstellen.

Nicht zuletzt wird durch die Auswölbung des Stütztopfs (63) der Verdrängerraum (79) erheblich vergrößert, was zur Anpassung der Gasfederrate benutzt wird.

Zwischen den Längsträgern (11) und den Schräglenkern (51) sind räumlich vor der Raddrehachse (2) die äußeren Spurstangen (98) als Teile der Lenkung angeordnet. Die Spurstangen (98) enden im mittleren Achsbereich an den Lenkzwischenhebeln (96). Letztere sind über die mittlere Spurstange (99) miteinander gekoppelt und in Lenkzwischenhebellagern (97) gelagert. Die Lenkzwischenhebellager (97) sind an den Längsträgern (11) z.B. über kurze, nach innen ragende Kragarme (13) angeordnet. Am fahrerseitigen Lenkzwischenhebel (96) ist der Lenkhebel (95) drehstarr befestigt.

Hinter der hinteren Quertraverse (30) ist ein z.B. mehrfach gekröpfter U-Stabilisator (90) angeordnet. Der U-Stabilisator (90) ist über Schraubschellenadapter (12) an den hinteren Enden der Längsträger (11) schwenkbar gelagert. Die Enden der Stabilisatorhebelarme (91) stützen sich über Koppelstangen (92) an den unteren Schräglenkern (51) gelenkig ab. Die Koppelstangen (92) sind in der Konstruktionslage zumindest annähernd vertikal ausgerichtet.

### Bezugszeichenliste

- 1: Rad
- 2: Raddrehachsen, Mittellinie
- 3: Horizontalebene durch (2)
- 5: Fahrzeugrahmen, Fahrzeugaufbau
- 6: Längsholme des Leiterrahmens (5)
- 7: Breite der Längsholmen (6)
- 8: Querkräfte
- 9: Fahrtrichtung

- 10: Montagerahmen
- 11: Längsträger, rohrförmig, rechts, links
- 12: Schraubschellenadapter, Stabilisatorlagerung
- 13: Kragarme für die Lenkung
- 14: Normalkraft (entgegen Radaufstandskraft)
- 15: Moment aufgrund von (14)
- 16: Seitenkraft bei Kurvenfahrt
- 17: Moment aufgrund von (16)
- 18: Seitenkraft bei Kurvenfahrt
- 19: Moment aufgrund von (18)

- 20: Quertraverse, vorn
- 21: Schräglenkerlager, vorn
- 22: Blattfedergelenke, alternativ
- 23: Adapter für Crashbox

- 30: Quertraverse, hinten
- 31: Schräglenkerlager, hinten
- 32: Traversenflansch

- 35: Tragelement, gabelartig
- 36: Flansch, fußseitig
- 37: Arm, vorn
- 38: Arm, hinten
- 39: Flansche

- 41: Querlenkerträger, Lenkerträger, vorn
- 42: Gabellaschen
- 43: Befestigungskonsolen
- 45: Querlenkerträger, Lenkerträger, hinten
- 46: Gabellaschen
- 47: Befestigungskonsolen
- 48: Bohrungen in (47)
- 49: Verrippungen

- 51: Schräglenker, unten
- 52: Querlenker, oben
- 53: Gelenk, fahrwerkseitig, radträgerseitig
- 54, 55: Gelenke, fahrzeugaufbauseitig
- 56: Schwenkachse
- 57: Radträger
- 58: Radträgerarm
- 59: Befestigungsabstand

- 60: Gasfederdämpferbein
- 61: Mittellinie
- 62: Gasfeder, Luftfederung, Fahrzeugfederung
- 63: Stütztopf, Federbeintopf, Kopfplatte
- 64: Abstützflansch
- 65: Ringsteg, außen
- 66: Ringsteg, innen
- 67: Ringsteg, innen, für (68)
- 68: Gummipuffer
- 69: Bohrung, zentral

- 71: Versteifungsrippe
- 72: Gewindebohrungen
- 73: Verbreiterungen
- 74: Sicke, umlaufend
- 75: Abrollkolben
- 76: Federteller
- 77: Balg, Schlauchrollbalg
- 79: Verdrängerraum

- 81: Stoßdämpfer
- 82: Kolbenstange
- 83: Stützlager, Kolbenstangengelenk, elastisch
- 84: Elastomerkörper
- 85: Dämpferrohr, Dämpferzylinder
- 86: Anschlagteller
- 87: Verlängerung
- 88: Gelenkauge

- 90: U-Stabilisator
- 91: Stabilisatorarme
- 92: Koppelstangen

- 95: Lenkhebel
- 96: Lenkzwischenhebel
- 97: Lenkzwischenhebellager
- 98: Spurstangen, außen
- 99: Spurstange, Mitte

## Patentansprüche

1. Einzelradaufhängung für eine Hochlenkerachse mit pro Radseite einem Radträger (57), der über mindestens einen unteren Lenker (51) und mindestens einen oberen Lenker (52), einem Quer- oder Schräglenker, an einem am Fahrzeugrahmen (5) befestigten Montagerahmen (10) gelagert ist, **dadurch gekennzeichnet,**
- **dass** der Montagerahmen (10) zwei Längsträger (11) und zwei Quertraversen (20, 30) umfasst, wobei die Quertraversen mit den Längsträgern (11) kraft- oder stoffschlüssig verbunden sind,
- **dass** die hintere Quertraverse (30) nach oben verlängert ist, wobei diese Verlängerung einen Lenkerträger (45) für den oberen Lenker (52) bildet oder den Lenkerträger (45) über ein Tragelement (35) formsteif lagert,
- **dass** zwischen den Quertraversen (20, 30) pro Längsträger (11), ein weiterer Lenkerträger (41) für den oberen Lenker (52) angeordnet ist, der jeweils den nächstgelegenen Längsträger (11) form- oder kraft- oder stoffschlüssig umgreift.

2. Einzelradaufhängung nach Anspruch 1,
**dadurch gekennzeichnet, dass**
die Längsträger (11) Rohre mit kreisringförmigem Querschnitt sind.

3. Einzelradaufhängung nach Anspruch 1,
**dadurch gekennzeichnet, dass**
die Längsträger (11) über ihre gesamte Länge einen unveränderlichen Querschnitt haben.

4. Einzelradaufhängung nach Anspruch 1,
**dadurch gekennzeichnet, dass**
der Außendurchmesser oder die Breite der Längsträger (11) die Breite (7) der Längsholmen (6) des Fahrzeugrahmens (5) um maximal 40% übertrifft.

5. Einzelradaufhängung nach Anspruch 1,
**dadurch gekennzeichnet, dass**
die Längsträger (11) räumlich unterhalb der Längsholmen (6) angeordnet sind.

6. Einzelradaufhängung nach Anspruch 1,
**dadurch gekennzeichnet, dass**
die Längsträger (11) und die Quertraversen (20, 30) rechtwinkelig miteinander verbunden sind.

7. Einzelradaufhängung nach Anspruch 6,
**dadurch gekennzeichnet, dass**
die gedachten Mittellinien der Längsträger (11) und der Quertraversen (20, 30) einen Rahmen aufspannen, dessen gleichlange Diagonalen mindestens eine Länge haben, die dem zweifachen Abstand zwischen der Fahrzeugaufstandsfläche und der Raddrehachse (2) in Radmitte entsprechen.

8. Einzelradaufhängung nach Anspruch 6,
**dadurch gekennzeichnet, dass**
die Lenkerträger (41, 45) im Bereich der fahrzeugaufbauseitigen Gelenke (54, 55) des oberen Lenkers (52) über ein formsteifes Bauteil (63) der
Fahrzeugfederung (62) form und/oder kraftschlüssig miteinander verbunden sind.

9. Einzelradaufhängung nach Anspruch 8,
**dadurch gekennzeichnet, dass**
die form- und/oder kraftschlüssige Verbindung zwischen dem Bauteil (63) und den Lenkerträgern (41, 45) lösbar ist.

10. Einzelradaufhängung nach Anspruch 1,
**dadurch gekennzeichnet, dass**
die Bodenfreiheit der hinteren Quertraverse (30) kleiner ist als die halbe Bodenfreiheit der Längsholme (6) des Fahrzeugrahmens (5).

11. Einzelradaufhängung nach mindestens einem der vorangegangenen Ansprüche,
**dadurch gekennzeichnet, dass**
die Lenkerträger (41, 45) einer Radseite einen Befestigungsabstand (59) an dem entsprechenden Längsholm (6) haben, der kürzer ist als der halbe, mittlere Abstand der Quertraversen (20) und (30).

## Claims

1. Independent wheel suspension for a double-wishbone high link axle with one wheel carrier (57) per wheel side, which is suspended via at least one lower control arm (51) and at least one upper control arm (52), a transverse control arm or semi-trailing arm, on a mounting frame (10) secured to the vehicle frame (5),
**characterised in that**
- the mounting frame (10) comprises two longitudinal members (11) and two cross members (20, 30), wherein the cross members are connected to the longitudinal members (11) in a force-fit or material-fit manner,
- the rear cross member (30) is extended upward, wherein this extension forms a control arm support (45) for the upper control arm (52) or bears the control arm support (45) via a support element (35) in a form-stiff manner,
- a further control arm support (41) for the upper control arm (52) is disposed between the cross members (20, 30) for each longitudinal member (11), which respectively encloses the nearest longitudinal member (11) in a form-fit or force-fit or material-fit manner.

2. Independent wheel suspension according to claim 1,
**characterised in that**
the longitudinal members (11) are tubes with a circular cross section.

3. Independent wheel suspension according to claim 1,
**characterised in that**
the longitudinal members (11) have an invariable cross section over their entire length.

4. Independent wheel suspension according to claim 1,
**characterised in that**
the outer diameter or the width of the longitudinal members (11) exceeds the width (7) of the longitudinal beams (6) of the vehicle frame by 40% at the most.

5. Independent wheel suspension according to claim 1,
**characterised in that**
the longitudinal members (11) are spatially arranged below the longitudinal beams (6).

6. Independent wheel suspension according to claim 1,
**characterised in that**
the longitudinal members (11) and the cross members (20, 30) are connected to each other at a right angle.

7. Independent wheel suspension according to claim 6,
**characterised in that**
the imaginary centre lines of the longitudinal members (11) and cross members (20, 30) span a frame, whose diagonals of the same length have at least one length which corresponds to the two-fold distance between the vehicle footprint and the wheel rotational axle (2) in the wheel centre.

8. Independent wheel suspension according to claim 6,
**characterised in that**
the control arm supports (41, 45) are connected to each other in the region of the joints (54, 55) on the vehicle construction side of the upper control arm (52) in a form-fit or force-fit manner via a form-stiff component (63) of the vehicle spring arrangement (562).

9. Independent wheel suspension according to claim 8,
**characterised in that**
the form-fit and/or force-fit connection between the component (63) and the control arm supports (41, 45) can be released.

10. Independent wheel suspension according to claim 1,
**characterised in that**
the bottom freedom of the rear cross member (30) is smaller than half the bottom freedom of the longitudinal beams (6) of the vehicle frame.

11. Independent wheel suspension according to at least one of the preceding claims,
**characterised in that**
the control arm supports (41, 45) of a wheel side have a fastening distance at the corresponding longitudinal beam (6), which is shorter than half the average distance of the cross members (20) and (30).

## Revendications

1. Suspension indépendante destinée à un essieu à bras surélevé, comprenant pour chaque roue un support de roue (57), monté par l'intermédiaire d'au moins un bras inférieur (51) et d'au moins un bras supérieur (52), à savoir un bras transversal ou oblique sur un cadre de montage (10) fixé sur le châssis (5) du véhicule, **caractérisée en ce que**
- ledit cadre de montage (10) comprend deux longerons (11) et deux traverses (20, 30),
- les traverses sont reliées aux longerons (11) par complémentarité de forme ou par liaison de force,
- la traverse arrière (30) se prolonge vers le haut, ce prolongement formant un support de bras (45) pour le bras supérieur (52) ou supportant de manière indéformable le support de bras (45) par l'intermédiaire d'un élément porteur (35),
- un autre support de bras (41) pour le bras supérieur (52) est disposé entre les traverses (20, 30), cet autre support de bras (41) entourant le longeron (11) le plus proche par complémentarité de forme ou par liaison de force.

2. Suspension indépendante selon la revendication 1, **caractérisé en ce que** les longerons (11) sont des tubes de section transversale annulaire.

3. Suspension indépendante selon la revendication 1, **caractérisée en ce que** les longerons (11) présente sur toute leur longueur une section transversale constante.

4. Suspension indépendante selon la revendication 1, **caractérisé en ce que** le diamètre extérieur ou la largeur des longerons (11) est supérieure à la largeur (7) des pièces longitudinales (6) du châssis du véhicule (5) de 40 % maximum.

5. Suspension indépendante selon la revendication 1, **caractérisée en ce que** les longerons (11) sont disposés spatialement sous les pièces longitudinales (6).

6. Suspension indépendante selon la revendication 1, **caractérisée en ce que** les longerons (11) et les traverses (20, 30) sont reliées perpendiculairement les uns aux autres.

7. Suspension indépendante selon la revendication 6, **caractérisée en ce que** les lignes médianes imaginaires des longerons (11) et des traverses (20, 30) délimitent un cadre, dont les diagonales de longueur identique présentent au moins une longueur qui correspond à deux fois l'écartement entre la surface de contact du véhicule et l'axe de rotation de la roue (2) au centre de la roue.

8. Suspension indépendante selon la revendication 6, **caractérisée en ce que** les supports de bras (41, 45) dans la région des joints articulés côté carrosserie du véhicule (54, 55) du bras supérieur (52) sont reliés les uns aux autres par l'intermédiaire d'un composant indéformable (63) de la suspension (62) du véhicule par complémentarité de forme et / ou par liaison de force.

9. Suspension indépendante selon la revendication 8, **caractérisée en ce que** la liaison par complémentarité de forme et / ou par liaison de force entre le composant (63) et les longerons (41, 45) est amovible.

10. Suspension indépendante selon la revendication 1, **caractérisée en ce que** la garde au sol de la traverse arrière (30) est plus petite que la moitié de la garde au sol des pièces longitudinales (6) du châssis du véhicule (5).

11. Suspension indépendante selon au moins l'une quelconque des revendications précédentes, **caractérisée en ce que** les supports de bras (41, 45) d'une roue présentent une distance de fixation (59) sur la pièce longitudinale correspondante (6) qui est inférieure à la moitié de l'écartement moyen des traverses (20) et (30).
